(19) Europäisches Patentamt / European Patent Office / Office européen des brevets

(11) **EP 4 237 796 B1**

(12) **FASCICULE DE BREVET EUROPEEN**

(45) Date de publication et mention de la délivrance du brevet:
**25.02.2026 Bulletin 2026/09**

(21) Numéro de dépôt: **21783022.3**

(22) Date de dépôt: **05.10.2021**

(51) Classification Internationale des Brevets (IPC):
**G01C 21/20** (2006.01)    **G01S 5/02** (2010.01)
**G01S 13/74** (2006.01)

(52) Classification Coopérative des Brevets (CPC):
**G01C 21/20; G01S 5/0244; G01S 5/0278;
G01S 5/14;** G01S 13/785; G01S 2205/03

(86) Numéro de dépôt international:
**PCT/EP2021/077460**

(87) Numéro de publication internationale:
**WO 2022/089894 (05.05.2022 Gazette 2022/18)**

(54) **NAVIGATION RNP SANS GNSS**

RNP-NAVIGATION OHNE GNSS

RNP NAVIGATION WITHOUT GNSS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.10.2020 FR 2011071**

(43) Date de publication de la demande:
**06.09.2023 Bulletin 2023/36**

(73) Titulaire: **THALES**
**92400 Courbevoie (FR)**

(72) Inventeurs:
• **ARETHENS, Jean-Pierre**
**26000 VALENCE (FR)**
• **LOMBARDI, Warody**
**26000 VALENCE (FR)**
• **CHOPARD, Vincent**
**26000 VALENCE (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**GB-A- 2 003 691    US-A- 3 659 085
US-A- 3 659 085**

• **BATTISTA GIUSEPPE ET AL: "Placing LDACS-based ranging sources for robust RNP 1.0 accuracy en-route", 2017 IEEE/AIAA 36TH DIGITAL AVIONICS SYSTEMS CONFERENCE (DASC), IEEE, 17 September 2017 (2017-09-17), pages 1 - 9, XP033248970, DOI: 10.1109/ DASC.2017.8102135**
• **vol. TSGC, 14 March 2003 (2003-03-14), pages 1 - 215, XP062017531, Retrieved from the Internet <URL:http://ftp.3gpp2.org/TSGC/Working/2001/ TSG-C_0101/Wg4/Swg4.3/> [retrieved on 20030314]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

Domaine de l'invention

Le domaine de l'invention concerne l'avionique en général, et les systèmes et procédés de localisation utilisés par un système de gestion du vol d'un aéronef en particulier

Etat de l'art précédent.

Les réglementations actuelles de navigation aérienne distinguent plusieurs catégories de navigation. La première catégorie est celle de la navigation dite « conventionnelle », la plus ancienne : il s'agit d'utiliser des radiobalises pour naviguer de balise en balise. La seconde catégorie concerne la navigation dite PBN qui consiste à déterminer à partir de capteurs une position avion et d'utiliser cette position pour guider l'avion le long d'une route définie à partir de points de cheminement ou « waypoints ». Ce type de navigation nécessite d'associer au calcul de la position le calcul d'une incertitude (appelée EPU à 95%).

La navigation PBN se décompose elle-même en deux concepts de navigation distincts : 1) la navigation RNAV : une route est définie avec un niveau de performance en précision associé. Ainsi pour une route RNAV 10, il est demandé au système de navigation de permettre un asservissement de la route avec une précision à 95% de +/-10 miles nautiques (nm) ; et 2) la navigation RNP qui requiert, en plus de ce qui est demandé pour une route RNAV, une fonction de surveillance et d'alerte (« *On board Monitoring & alerting* » en anglais) permettant de surveiller le maintien de l'avion dans un couloir ou confinement ou « containment » de plus ou moins (+/-) 2 nm autour de la route volée. Il est généralement associé une probabilité de sortie du confinement de 10^-5/h.

L'invention se situe dans le domaine de la navigation RNP. Pour pouvoir supporter ce type de navigation, il convient de calculer une position et de caractériser, de manière statistique, la performance du positionnement (par exemple au travers d'indicateur(s)). Un premier exemple d'indicateur consiste à qualifier la précision de positionnement au travers d'une estimation à 95% de son erreur: l'EPU. Cette estimation est réalisée en faisant l'hypothèse qu'il n'existe pas de panne latente qui pourrait affecter le calcul de la position. Un autre exemple d'indicateur permet de qualifier avec une certaine probabilité l'intégrité du positionnement au travers d'un rayon de protection autour de la position calculée : le HIL. Cette estimation de confiance est réalisée en faisant l'hypothèse qu'il peut exister une (ou plusieurs) pannes latente affectant les mesures utilisées, et prend en compte la probabilité d'occurrence des pannes. La navigation RNP est notamment définie dans la norme RTCA, Inc., *Minimum Operational Performance Standards for Global Positioning System/Wide Area Augmentation System Airborne Equipment,* RTCA DO-229D, December 13, 2006 et par le document « ICAO Doc 9613 Performance-based Navigation (PBN) Manual », notamment au paragraphe 1.2.4.1 de ce document. Le concept d'intégrité pour l'aéronautique est quant à lui défini par la norme RTCA, Inc., *Minimum Operational Performance Standards for Global Positioning System/Wide Area Augmentation System Airborne Equipment,* RTCA DO-229C, November 28, 2001.

Le principe de Navigation RNP a été conçu en considérant l'utilisation d'une position GNSS qui est fournie avec ces deux indicateurs de performance. La mise en œuvre du RNP dans les espaces aériens est un élément important pour répondre aux besoins de croissance du trafic aérien.

Les systèmes de localisation et de navigation par satellite, également désignés par l'acronyme GNSS, sont devenus ces dernières décennies des outils courants permettant de supporter les opérations aériennes dans toutes les phases de vol d'un aéronef, avec un haut niveau de performance et d'intégrité.

Cependant, ces systèmes se fondent sur des signaux satellites qui sont faibles et qui sont surtout sensibles aux interférences ou aux coupures. Les coupures ou interruptions de service GNSS restent une préoccupation majeure dans l'industrie. Afin de généraliser l'utilisation du RNP, il est nécessaire de se protéger vis à vis du risque de perte du signal GNSS et de considérer la capacité de savoir réaliser au moins partiellement cette navigation avec des systèmes de repli en cas de perte de signal GNSS.

Ce problème n'est en pratique pas adressé, et peu de littérature existe sur ce sujet. Le positionnement par le biais de radiobalises DME a pu être évoqué, mais sans permettre de garantir un niveau de performance comme la navigation basée sur GNSS.

Par exemple, le brevet publié sous le numéro GB2003691 décrit des échanges temps-réel sol-bord, qui permettent d'établir un diagnostic d'intégrité d'une balise. Cette approche présente des limitations.

Dans la littérature scientifique, les descriptions d'algorithmes déterminant la localisation à partir de mesure distance par rapport à des radiobalises DME ne garantissent pas l'intégrité de la position utilisée par les systèmes de gestion de vol et sont insuffisants pour supporter de la navigation de type RNP. Les algorithmes de positionnement actuels des radiobalises ne prennent notamment pas en compte la contrainte de fourniture d'un rayon de protection autour de la position pour supporter les exigences de la navigation RNP. Par exemple, la publication scientifique Berz, G., Vitan, V., & Skyrda, I. (2013, September). Can Current DME Support PBN Operations with Integrity?. In Proceedings of the 26th International Technical Meeting of the Satellite Division of The Institute of Navigation (ION GNSS+ 2013) (pp. 233-250). décrit certaines des contraintes techniques qui peuvent être rencontrées pour permettre de supporter les exigences de la navigation RNP par un positionnement basé sur des radiobalises. Cependant, il ne fournit aucune solution pratique à ce problème. Les documents Battista , G., Kumar, R., Nossek, E., & Osechas, O. (2017, September). Placing LDACS-based ranging sources for robust RNP 1.0 accuracy en-route. In 2017 IEEE/AIAA 36th Digital Avionics Systems Conference (DASC) (pp. 1-9). IEEE., US 3 659 085 et 3GPP2 draft sont connus dans le domaine de la navigation par radiobalise et/ou GPS.

Il y a donc besoin d'une méthode de navigation basée sur l'utilisation de radiobalise permettant fournissant une garantie quant à la position de l'aéronef compatible avec la navigation RNP.

Résumé de l'invention.

A cet effet, l'invention a pour objet une méthode mise en œuvre par ordinateur embarqué dans un aéronef, comprenant : une première étape d'obtention de distances de l'aéronef par rapport à au moins quatre émetteurs radio ayant chacun une position fixe dans un repère géographique ; une deuxième étape de conversion des positions des émetteurs radio dans un système de référence terrestre ; une troisième étape de définition, sous forme matricielle, d'un système d'équations redondantes liant, dans le système de référence terrestre, la position de l'aéronef et les positions des émetteurs radio ; une quatrième étape de résolution dudit système d'équations, afin d'obtenir une position estimée de l'aéronef, et une matrice de covariance de l'erreur de position dans le système de référence terrestre ; une cinquième étape conversion de la position estimée de l'aéronef, et de la matrice de covariance de l'erreur de position dans le repère géographique ; une sixième étape de calcul, à partir de la matrice de covariance de l'erreur de position dans le repère géographique, du rayon d'une sphère centrée autour de la position estimée de l'aéronef, dans laquelle se situe la position réelle de l'aéronef avec une probabilité égale ou supérieure à un seuil prédéfini.

Avantageusement, les émetteurs radio sont des radiobalises.

Avantageusement, les émetteurs radio sont des radiobalises de type « Distance Measuring Equipement » (DME).

Avantageusement, l'aéronef a une position dans le système de référence terrestre défini par un vecteur de coordonnées $(x, y, z)$ ; chaque émetteur radio est défini par un indice i, et a une position dans le système de référence terrestre définie par un vecteur de 3 coordonnées $(x_i, y_i z_i)$ ; la position de chaque émetteur radio est lié à la position de l'aéronef par l'équation $d_i^2 = (x - x_i)^2 + (y - y_i)^2 + (z - z_i)^2$.

Avantageusement, , la définition sous forme matricielle du système d'équations redondantes consiste à définir un système d'équations de la forme :

$$\underbrace{\begin{bmatrix} 1 & -2x_1 & -2y_1 & -2z_1 \\ 1 & -2x_2 & -2y_2 & -2z_2 \\ \vdots & \vdots & \vdots & \vdots \end{bmatrix}}_{H} \underbrace{\begin{bmatrix} x^2 + y^2 + z^2 \\ x \\ y \\ z \end{bmatrix}}_{\dot{X}} = \underbrace{\begin{bmatrix} d_1^2 - x_1^2 - y_1^2 - z_1^2 \\ d_2^2 - x_2^2 - y_2^2 - z_2^2 \\ \vdots \end{bmatrix}}_{b}$$

Avantageusement, l'étape de résolution du système d'équations utilise une matrice de pondération diagonale, comprenant pour chaque mesure de distance un élément de valeur égale à $\frac{1}{2d_i\sigma_{d_i} + \sigma_{d_i}^2}$, où : $d_i$ représente la distance entre l'aéronef, et l'émetteur radio d'indice i ; $\sigma_{d_i}$, représente l'écart-type du bruit sur la mesure de distance $d_i$.

Avantageusement, l'étape de résolution du système d'équations consiste en une décomposition en valeurs singulières, une décomposition QR, ou une résolution pseudo inverse de Moore-Penrose.

Avantageusement, la sixième étape consiste à : pour chaque émetteur radio d'indice i : effectuer l'ensemble des troisième à cinquième étapes avec le système d'équations dans lequel l'équation liant la position de l'aéronef et les positions dudit émetteurs radio a été supprimée, afin d'obtenir une position estimée et une matrice de covariance de l'erreur de position dans le plan horizontal ne prenant pas en compte ledit émetteur radio d'indice i ; calculer une différence entre la matrice de covariance de l'erreur de position dans le plan horizontal, et la matrice de covariance de l'erreur de position dans le plan horizontal ne prenant pas en compte ledit émetteur radio d'indice i ; calculer une distance, dans le plan horizontal, entre la position estimée de l'aéronef, et la position estimée de l'aéronef ne prenant pas en compte ledit émetteur radio d'indice i ; calculer un rayon de ladite sphère pour ledit émetteur radio d'indice i, en fonction de ladite différence, et de ladite distance ; calculer le rayon de ladite sphère, comme le plus grand desdits rayons pour chaque émetteur d'indice i.

Avantageusement le rayon de ladite sphère pour ledit émetteur radio d'indice i, est calculé par les étapes suivantes : un calcul de l'écart-type $\sigma_i$ d'une matrice $dP_i$ des différences entre la matrice de covariance de l'erreur de position dans le plan horizontal, et la matrice de covariance de l'erreur de position dans le plan horizontal ne prenant pas en compte ledit émetteur radio d'indice i, par l'application de la formule $\sigma_i = \sqrt{\max(\lambda(dP_i))}$ dans laquelle ($\lambda(dP_i)$) est le vecteur de valeur propres de ladite matrice des différences, et la fonction max() une fonction retournant le plus grand des éléments de la matrice ; le calcul d'un seuil $TH_i$ égal à la multiplication dudit écart-type $\sigma_i$ de la matrice $dP_i$ des différences par une première constate prédéfinie T; si la distance $D_i$ dans le plan horizontal entre la position de l'aéronef, et la position de l'aéronef sans tenir compte de l'émetteur d'indice i est inférieure audit seuil $TH_i$, le calcul du rayon de ladite sphère pour ledit émetteur radio d'indice i par l'application de la formule $TH_i + k\sqrt{\max(\lambda(P_{NE\,i}))}$, où k est une deuxième constante prédéfinie, et $\lambda(P_{NEi})$ est le vecteur de valeurs propres de la matrice $P_{NEi}$ de covariance de l'erreur de position dans le plan horizontal ne prenant pas en compte ledit émetteur radio d'indice i ; sinon, le calcul du rayon de ladite sphère pour ledit émetteur radio d'indice i par l'application de la formule $D_i + k\sqrt{\max(\lambda(P_{NE\,i}))}$.

Avantageusement, la première constante prédéfinie T est obtenue par l'application de la formule :
$T^2 = F^{-1}\left(1 - \left(\frac{PFA}{m}\right), 1\right) = \left\{T^2 : F(T^2, 1) = \frac{PFA}{m}\right\}$ ; la deuxième constante prédéfinie k est obtenue par l'application de la formule : $k^2 = F^{-1}(1 - PMD, 1)$ ; où : F est la fonction de densité de probabilité d'une distribution $\chi^2$ de degré 1 ; m est le nombre d'émetteurs radio ; PFA est une probabilité cible de fausses alarmes pour la détection d'erreurs de mesure de distance; PND est une probabilité cible de détections manquées d'erreurs de mesure de distance souhaitée.

Avantageusement, la méthode comprend de plus l'obtention d'une distance de l'aéronef par rapport à un émetteur radio virtuel à partir d'une mesure de pression atmosphérique d'un baromètre embarqué dans l'aéronef.

Avantageusement, ledit émetteur virtuel est situé au centre de la Terre ;une altitude de l'aéronef est évaluée à partir de la mesure de la pression atmosphérique ; la distance de l'aéronef par rapport à l'émetteur radio virtuel est égale à la somme du rayon de la Terre et de l'altitude de l'aéronef.

Avantageusement, le système d'équations redondantes comprend l'équation additionnelle : $x^2 + y^2 + z^2 = (z_{bt} + R_E)^2$ où: $z_{bt}$ représente l'altitude de l'aéronef ; $R_E$ représente le rayon de la Terre, à la position de l'aéronef.

Avantageusement, la définition sous forme matricielle du système d'équations redondantes consiste à définir un système d'équations de la forme :

$$\underbrace{\begin{bmatrix} 1 & -2x_1 & -2y_1 & -2z_1 \\ 1 & -2x_2 & -2y_2 & -2z_2 \\ \vdots & \vdots & \vdots & \vdots \\ 1 & 0 & 0 & 0 \end{bmatrix}}_{H} \underbrace{\begin{bmatrix} x^2 + y^2 + z^2 \\ x \\ y \\ z \end{bmatrix}}_{X} = \underbrace{\begin{bmatrix} d_1^2 - x_1^2 - y_1^2 - z_1^2 \\ d_2^2 - x_2^2 - y_2^2 - z_2^2 \\ \vdots \\ (z_{bt} + R_E)^2 \end{bmatrix}}_{b}$$

L'invention a également pour objet un programme d'ordinateur comprenant des instructions de code de programme enregistrées sur un support lisible par ordinateur, lesdites instructions de code de programme étant configurées, lorsque ledit programme fonctionne sur un ordinateur pour exécuter une méthode selon l'un des modes de réalisation de l'invention.

L'invention a également pour objet un système de gestion de vol d'un aéronef comprenant des moyens de calcul configurés pour exécuter une méthode selon l'un des modes de réalisation de l'invention.

D'autres caractéristiques, détails et avantages de l'invention ressortiront à la lecture de la description faite en référence aux dessins annexés donnés à titre d'exemple et qui représentent, respectivement :

[Fig.1] un exemple de système FMS dans lequel l'invention peut être implémentée ;

[Fig. 2] un exemple de méthode selon un ensemble de modes de réalisation de l'invention.

Certains acronymes anglo-saxons couramment utilisés dans le domaine technique de la présente demande pourront être employés au cours de la description. Ces acronymes sont listés dans le tableau ci-dessous, avec notamment leur expression anglo-saxonne et leur signification.

[Tableaux 1]

| Acronyme | Expression | Signification |
|---|---|---|
| DB | DataBase | Base de Données. Conteneur permettant de stocker et retrouver l'intégralité des informations en rapport avec une activité. Se présente généralement sous forme informatisée. |
| DME | Distance Measuring Equipment | Equipement de Mesure de Distance. Radio-transpondeur permettant de connaître la distance d'un aéronef à une base de données navigation. Est généralement utilisée en combinaison d'un VOR pour la navigation aérienne. |
| ECEF | Earth Centered, Earth Fixed | Centré sur la Terre, Fixé à la Terre. Système de coordonnées géographiques cartésiennes, défini par trois axes orthonormaux X, Y, Z, dont l'origine se situe au centre de la Terre, et dont les axes sont alignés avec les pôles géographiques de la Terre, et le méridien de référence international |
| EPU | Estimated Position Uncertainty | Incertitude de Position Estimée. Définit une distance horizontale autour de la position estimée de l'aéronef, définissant une zone dans laquelle l'aéronef a une probabilité à 95% de se situer égale à un seuil prédéfini. Quand cette position est élaborée par un système de positionnement de l'aéronef utilisant un principe de triangularisation à partir de mesures de signaux de radionavigation émis par des balises dont on connait la position, la valeur de l'EPU est dépendante de la statistique des erreurs de mesures sur les signaux, ainsi que de la position relative des mesures. |
| FPLN | Flight Plan | Plan de vol. Description du vol suivi par l'aéronef, et notamment les points de cheminements décrivant la route de celui-ci. |
| FMD | Flight Management Display | Affichage dans un cockpit de données de Gestion de Vol sous forme de pages ou fenêtres. Système d'affichage de données fournies par un système FMS |
| FMS | Flight Management System | Système de Gestion de Vol. Système informatisé permettant de calculer des trajectoires et plans de vol d'aéronef, et de fournir les consignes de guidage adaptées à l'opérateur ou pilote automatique pour suivre la trajectoire calculée. |
| GNSS | Global Navigation Satellite System | Géolocalisation et Navigation par un Système de Satellites. Ensemble de composants reposant sur une constellation de satellites artificiels permettant de fournir à un utilisateur par l'intermédiaire d'un récepteur portable de petite taille sa position 3D, sa vitesse 3D et l'heure. |
| GPS | Global Positionning System | Système de Positionnement Global. Système de positionnement par satellite. |
| HIL | Horizontal Integrity Limit | Limite d'Intégrité Horizontale. Définit, le rayon d'un cercle autour de la position courante élaborée par un système de positionnement de l'aéronef utilisant des mesures de signaux de radionavigation, dans laquelle il est garanti que la position vraie de l'aéronef se trouve avec une probabilité donnée, y compris en cas d'erreurs anormales sur les signaux utilisés dues au système qui les élabore et qui aurait une probabilité d'occurrence plus forte que la probabilité recherchée. Pour la positionnement des aéronefs en utilisant le système GPS, on recherche en général une intégrité de la position meilleure que $1-10^{-7}$/h |
| KCCU | Keyboard Console Control Unit | Unité de Contrôle de Curseur de Clavier. Interface Homme Machine pouvant être intégrée à un cockpit comprenant un clavier afin que l'opérateur puisse rentrer des informations dans le FMS. |
| MCDU | Multi purposes Control Display Unit | Unité d'Affichage Multifonction. Interface Homme Machine pouvant être intégrée à un cockpit permettant l'affichage et la saisie de nombreuses informations liées au FMS. |
| ND | Navigation Display | Ecran de Navigation. Elément d'affichage cockpit présentant en particulier la trajectoire de vol latérale. |
| NDB | Non directional Beacon | Balise de radionavigation permettant de déterminer la direction entre un aéronef et la balise, dont la position est connue. |

(suite)

| Acronyme | Expression | Signification |
|---|---|---|
| NED | North East Down | Nord Est Bas. Système de référence dans lequel la position d'un point par rapport à la Terre est défini par une latitude, une longitude, et une altitude négative. |
| NEU | North East Up | Nord Est Haut. Système de référence dans lequel la position d'un point par rapport à la Terre est défini par une latitude, une longitude, et une altitude positive. |
| PBN | Performance Based Navigation | Navigation Basée sur la Performance. Type de navigation consistant à déterminer à partir de capteurs une position avion et d'utiliser cette position pour guider l'avion le long d'une route, en respectant un ensemble de critères définissant la fidélité du suivi de la route. |
| RNAV | Area NAVigation | Navigation de surface. Méthode de vol aux instruments dans laquelle un aéronef peut utiliser n'importe quelle trajectoire au sein d'un réseau de points de cheminement. |
| RNP | Required Navigation Performance | Performance de Navigation Requise. Exigence de navigation spécifiant les points 3D accessibles par un aéronef lors du vol d'une trajectoire. D'une manière générale, elle consiste en une tolérance en distance par rapport à un ensemble de points 3D matérialisant une trajectoire prédite.<br>La navigation RNP est définie dans la norme « RTCA DO 236 MINIMUM AVIATION SYSTEM PERFORMANCE STANDARDS: REQUIRED NAVIGATION PERFORMANCE FOR AREA NAVIGATION » et par « ICAO Doc 9613 Performance-based Navigation (PBN) Manual ». |
| RNP | Required Navigation Performance | Performance de Navigation Requise. Exigence de navigation spécifiant les points 3D accessibles par un aéronef lors du vol d'une trajectoire. D'une manière générale, elle consiste en une tolérance en distance par rapport à un ensemble de points 3D matérialisant une trajectoire prédite. |
| VD | Vertical Display | Affichage Vertical. Elément d'affichage pouvant être intégré dans un cockpit, et affichant le profil de référence et le profil de rejointe vertical de l'aéronef. |
| VHF | Very High Frequency | Très Haute Fréquence. Partie du spectre radioélectrique allant de 30 MHz à 300 MHz. |
| VOR | VHF Omnidirectional Range | Système de positionnement radioélectrique utilisé en navigation aérienne et fonctionnant avec les fréquences VHF. |

Certains acronymes français couramment utilisés dans le domaine technique de la présente demande pourront être employés au cours de la description. Ces acronymes sont listés dans le tableau ci-dessous, avec notamment leur signification.

[Tableaux 2]

| PFA | Probabilité de fausse alarme | La PFA est la probabilité maximale qu'un système de positionnement qui cherche à détecter des erreurs anormale sur les mesures qui servent à élaborer la position, lève une alarme alors que les mesures ne sont pas entachées d'erreurs anormales. |
|---|---|---|
| PND | Probabilité de non détecttion | La PND est la probabilité maximale qu'un système de positionnement qui cherche à détecter des erreurs anormale sur les mesures qui servent à élaborer la position, ne lève pas d'alarme alors qu'une mesure au moins parmi les mesures utilisées est entachée d'une erreur anormale. |

Description détaillée de l'invention

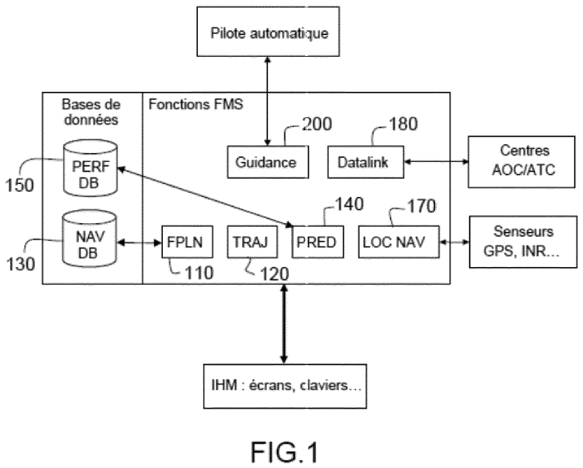

La figure 1 représente un exemple de système FMS dans lequel l'invention peut être implémentée.

Un système de gestion de vol peut être mis en œuvre par au moins un calculateur embarqué à bord d'un l'aéronef ou d'une station sol. Selon différents modes de réalisation de l'invention, il peut s'agir d'un système de gestion de vol de différents types d'aéronefs, par exemple d'un avion, d'un hélicoptère ou d'un drone.

Le FMS 100 détermine notamment une géométrie d'un profil de plan de vol suivi par l'aéronef. La trajectoire est calculée en quatre dimensions : trois dimensions spatiales et une dimension temps/profil de vitesse. Le FMS 100 transmet également à l'opérateur, via une première interface opérateur, ou au pilote automatique, des consignes de guidage calculées par le FMS 100 pour suivre le profil de vol. L'opérateur peut être situé dans l'aéronef, par exemple si l'aéronef est un avion ou un hélicoptère, ou bien au sol, par exemple si l'aéronef est un drone.

Un système de gestion de vol peut comporter une ou plusieurs bases de données telles que la base de données PERF DB 150, et la base de données NAV DB 130. Par exemple, la base de données PERF DB 150 peut comporter des paramètres aérodynamiques de l'aéronef, ou encore des caractéristiques des moteurs de l'aéronef. Elle contient notamment les marges de performances systématiquement appliquées dans l'état de l'art pour garantir des marges de sécurité sur les phases de descente et d'approche. La base de données NAV DB 130 peut par exemple comporter les éléments suivants : des points géographiques, des balises, des routes aériennes, des procédures de départ, des procédures d'arrivée, des contraintes d'altitude, de vitesse ou de pente...

La gestion d'un plan de vol selon l'état de la technique peut faire appel à des moyens de création/modification de plan de vol par l'équipage de l'aéronef au travers d'une ou plusieurs interfaces homme machine, par exemple :

- le MCDU ;
- le KCCU ;
- le FMD ;
- le ND ;
- le VD.

Cette création/modification de plan de vol peut par exemple comprendre le chargement de procédures par l'opérateur, ainsi que la sélection d'une procédure à ajouter au plan de vol courant.

Le FMS 100 comprend un module de gestion de plan de vol 110, nommé usuellement FPLN. Le module FPLN 110 permet notamment une gestion de différents éléments géographiques composant un squelette d'une route à suivre par l'aéronef comportant : un aéroport de départ, des points de passage, des routes aériennes à suivre, un aéroport d'arrivée. Le module FPLN 110 permet également une gestion de différentes procédures faisant partie d'un plan de vol comme : une procédure de départ, une procédure d'arrivée. La capacité FPLN 110 permet notamment la création, la modification, la suppression d'un plan de vol primaire ou secondaire.

Le plan de vol et ses différentes informations liées notamment à la trajectoire correspondante calculée par le FMS peuvent être affichés pour consultation de la part de l'équipage par des dispositifs d'affichage, appelés également interfaces homme-machine, présents dans le cockpit de l'aéronef comme un FMD, un ND, un VD.

Le module FPLN 110 fait appel à des données stockées dans des bases de données NAV DB 130 pour construire un plan de vol et la trajectoire associée.

Le FMS 100 comprend également un module TRAJ 120, permettant de calculer une trajectoire latérale pour le plan de vol défini par le module FPLN 110. Le module TRAJ 120 construit notamment une trajectoire continue à partir de points d'un plan de vol initial tout en respectant les performances de l'aéronef fournies par la base de données PERF DB 150. Le plan de vol initial peut être un plan de vol actif, un plan de vol secondaire. La trajectoire continue peut être présentée à l'opérateur au moyen d'une des interfaces homme machine.

Le FMS 100 comprend également un module de prédiction de trajectoire PRED 140. Le module PRED 140 construit notamment un profil vertical optimisé à partir de la trajectoire latérale de l'aéronef, fournie par le module TRAJ 120. A cette fin, le module PRED 140 utilise les données de la première base de données PERF DB 150. Le profil vertical peut être présenté à l'opérateur au moyen par exemple d'un VD.

Le FMS 100 comprend également un module de localisation 170, nommé LOCNAV sur la figure 1. Le module LOCNAV 170 effectue notamment une localisation géographique optimisée, en temps réel, de l'aéronef en fonction de moyens de géolocalisation embarqués à bord de l'aéronef.

Le FMS 100 comprend également un module de liaison de données 180, nommé DATA LINK (de la dénomination anglo-saxonne lien de données) sur la figure 1. Le module DATA LINK 180 permet de communiquer avec des opérateurs au sol, par exemple pour transmettre une trajectoire prédite de l'aéronef, ou recevoir des contraintes sur la trajectoire, comme la position prédite d'autres aéronefs ou des contraintes d'altitude.

Le FMS 100 comprend également un module de guidage 200. Le module de guidage 200 fournit notamment au pilote automatique ou à une des interfaces homme machine, des commandes appropriées permettant de guider l'aéronef dans des plans géographiques latéral et vertical (altitude et vitesse) pour que ledit aéronef suive la trajectoire prévue dans le plan de vol.

Les algorithmes de guidage mettent en œuvre des automatismes ayant en entrée un élément actif de trajectoire ou de plan de vol et la position mesurée par un ou plusieurs capteurs de l'aéronef. Ces consignes de guidage comprennent généralement a) une consigne de roulis, une vitesse angulaire de roulis ou un segment de trajectoire pour le guidage dans le plan horizontal; b) une assiette, un delta d'assiette, une vitesse angulaire de tangage, un facteur de charge, une accélération verticale, une vitesse verticale, une pente, ou un segment de trajectoire dans le plan vertical ; c) une vitesse, une accélération, une énergie totale, une consigne moteur, un objectif temporel de temps pour le guidage en vitesse.

**EP 4 237 796 B1**

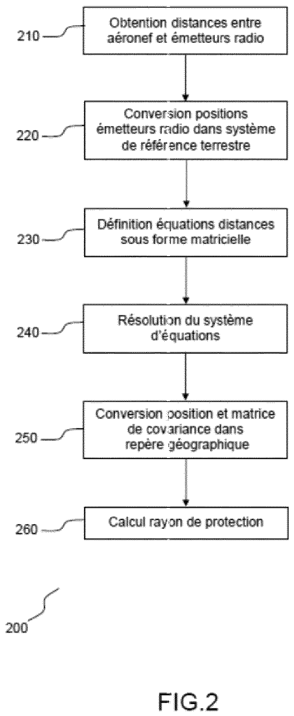

La figure 2 représente un exemple de méthode selon un ensemble de modes de réalisation de l'invention.

L'un des objectifs de la méthode 200 est de fournir à un aéronef la capacité de suivre une procédure de vol de type RNP même en cas de perte de signaux GNSS. La méthode 200 est une méthode mise en œuvre par au moins un ordinateur embarqué dans l'aéronef. Elle peut par exemple être mise en œuvre par le système 100.

Une procédure de vol de type RNP est particulièrement exigeante en matière de guidage de l'aéronef. Une procédure RNP se caractérise par:

- i) la capacité de naviguer selon un plan de vol comprenant des points de plan de vol (« waypoints » ou « points de cheminement » définis en base de données), et non pas selon des balises au sol,
- ii) selon un couloir de demi-largeur RNP dans lequel l'aéronef doit se trouver 95% du temps et un couloir de confinementde demi-largeur 2*RNP (avec un « buffer », c'est-à-dire une marge),
- iii) la nécessité d'estimer à bord la performance de localisation de l'aéronef et
- iv) la mise en œuvre d'un dispositif de surveillance embarqué comparant la performance de localisation avec la performance requise sur la procédure en base de données.

La méthode 200 comprend une première étape 210 consistant à obtenir des distances de l'aéronef par rapport à au moins quatre émetteurs radio ayant chacun une position fixe dans un repère géographique.

En pratique, cette étape consiste à déterminer, pour chacun des au moins 4 émetteurs radio respectivement, la distance de l'aéronef par rapport à l'émetteur radio. Chacun des émetteurs radio ayant une position fixe, ces informations permettent, comme nous le verrons dans la suite de la description, de positionner l'aéronef par rapport à la surface de la Terre. De préférence, les positions des émetteurs radio peuvent être distinctes les unes des autres.

Caque position de chaque émetteur radio est connue dans un repère géographique. Un repère géographique est un repère défini par une latitude, une longitude, et une altitude. En particulier, dans le cadre de l'invention, les positions des émetteurs radio peuvent être connues dans les repères NED ou NEU.

Les émetteurs radio peuvent être de différents types. Il peut par exemple s'agir d'antenne radio de communication, telles que des antennes de communication 4G ou 5G, ou de radiobalises de navigation. Par exemple, les émetteurs radio peuvent être des balises passives d'émissions de signaux NDB, VOR ou des balises actives telle que des transpondeurs DME qui réémettent avec un retard fixe les signaux d'interrogations qui leur sont adressés.

En pratique, la position de l'aéronef par rapport à chaque émetteur radio peut être obtenue de différentes manières, en fonction du type d'émetteur radio. Par exemple, l'émetteur radio peut émettre des signaux comprenant un temps d'émission. A la réception du signal par l'aéronef, un temps de réception peut être noté. La différence entre les temps de réception et d'émission indique le temps de parcours du signal radio, dont peut être déduite la position.

Dans d'autres cas, par exemple dans le cas de radiobalises DME, l'émetteur radio de l'interrogateur de l'avion est couplé avec un récepteur ; l'aéronef émet un signal radio codé à destination d'une balise donnée; à la réception par le transpondeur de la balise sol interrogée, le signal est décodé, et un signal retour est envoyé par l'émetteur radio du transpondeur. Lorsque ce signal retour est reçu par l'interrogateur de l'aéronef, celui-ci peut calculer le temps écoulé entre l'émission du premier signal, et la réception du signal retour. Ce temps correspond donc à un aller-retour d'une onde radio entre l'aéronef et la radiobalise, plus le temps de traitement par la radiobalise. Il est donc possible de déduire de cette information la distance entre l'aéronef et la radiobalise. Ce fonctionnement présente l'avantage d'obtenir une valeur fiable de la distance entre l'aéronef et la radiobalise, sans nécessiter de synchronisation des horloges entre l'aéronef et la radiobalise.

La méthode 200 comprend une seconde étape 220 de conversion des positions des émetteurs radio dans un système de référence terrestre.

Cette étape consiste à convertir les positions fixes des émetteurs de leur repère géographique (par exemple NEU ou NED, dans lequel la position est définie par une latitude, une longitude et une altitude) vers un système de référence terrestre. Le système de référence terrestre est un système de coordonnées géocentrique, dans lequel une position est définie par 3 distances, généralement notées x, y, z, du centre de la Terre selon un repère fixe défini par 3 axes orthonormaux. Ces coordonnées sont également définies par le sigle anglo-saxon ECEF.

Selon différents modes de réalisation de l'invention, les émetteurs radio utilisés peuvent être obtenus de différentes manières. Par exemple les émetteurs radio dont le signal est capté par l'aéronef peuvent être utilisés.

Par exemple, si les émetteurs radio sont des radiobalises DME, les balises visibles sont utilisées.

Cependant, dans certaines situations, par exemple à l'approche d'un aéroport, l'aéronef peut avoir accès à un grand nombre de radiobalises DME, par exemple plus de 40. Dans ce cas, un grand nombre de combinaison de balises est possible, certaines permettant une localisation plus précise. Afin de permettre de bénéficier de la meilleure précision de localisation, la demanderesse a déposé la demande de brevet français n° FR 1871548, permettant d'obtenir, pour une position donnée de l'aéronef, une liste des radiobalises DME permettant la meilleure précision quant à la position de l'aéronef.

Dans un ensemble de modes de réalisation de l'invention, les distances de l'aéronef par rapport aux émetteurs radio peuvent être complétées par une distance additionnelle d'un émetteur virtuel, déterminée à partir de la pression atmosphérique calculée par un baromètre embarqué dans l'aéronef.

L'utilisation de cet émetteur virtuel fournit plusieurs avantages :

- cela permet d'obtenir une mesure de distance supplémentaire, permettant d'améliorer la précision du calcul de position de l'aéronef ;

- lorsque seules quatre émetteurs radio sont visibles, l'utilisation d'un émetteur virtuel supplémentaire permet d'obtenir 5 distances par rapport à 5 points différent. Cette valeur minimale de 5 distances est généralement admise comme permettant d'obtenir une position fiable ;

- si une des mesures de distance par rapport aux émetteur radio est peu précise, le calcul de la distance par rapport à l'émetteur radio virtuel permet de la remplacer par une mesure plus précise.

Dans un ensemble de modes de réalisation de l'invention :

- ledit émetteur virtuel est situé au centre de la Terre ;
- une altitude de l'aéronef est évaluée à partir de la mesure de la pression atmosphérique ;
- la distance de l'aéronef par rapport à l'émetteur radio virtuel est égale à la somme du rayon de la Terre et de l'altitude de l'aéronef.

En pratique, ceci consiste à définir un émetteur radio virtuel ayant une position fixe au centre de la Terre, l'aéronef étant à une distance de cet émetteur égale à :

$$Z = R_E + z_{bt}$$

Où Z est la distance entre l'aéronef et l'émetteur radio virtuel, $R_E$ le rayon de la Terre (plus précisément le rayon du géoïde WGS84 à la position courante de l'aéronef), et $z_{bt}$ l'altitude de l'aéronef, estimée en fonction des mesures du baromètre. L'obtention d'une altitude de l'aéronef à partir de mesures d'un baromètre embarquée est bien connue de l'homme de l'art, et est basée sur le principe selon lequel la pression atmosphérique décroît avec l'altitude, et qu'il est donc possible de déterminer directement l'altitude à partir de la pression atmosphérique.

La méthode 200 comprend ensuite une troisième étape 230 de définition, sous forme matricielle, d'un système d'équations redondantes liant, dans le système de référence terrestre, la position de l'aéronef et les positions des émetteurs radio.

En pratique, cette étape consiste à définir un système d'équations redondantes liant :

- La position de l'aéronef, représentée par un vecteur de 3 coordonnées ECEF ($x$, y, z) ;

- A chaque position des émetteurs radio en coordonnées ECEF, chaque émetteur radio étant associé à un indice i, la position d'un émetteur d'indice i étant définie par le vecteur de 3 coordonnées ($x_i$, $y_i z_i$), et la distance géométrique, préalablement obtenue, entre l'aéronef et cet émetteur notée $d_i$.

Chaque équation liant la position de l'aéronef à la position d'un émetteur radio i peut alors s'écrire :

$$D_i^2 = (x - x_i)^2 + (y - y_i)^2 + (z - z_i)^2$$

Ce système d'équations peut être défini sous forme matricielle, de la manière suivante :

$$\underbrace{\begin{bmatrix} 1 & -2x_1 & -2y_1 & -2z_1 \\ 1 & -2x_2 & -2y_2 & -2z_2 \\ \vdots & \vdots & \vdots & \vdots \end{bmatrix}}_{H} \underbrace{\begin{bmatrix} x^2 + y^2 + z^2 \\ x \\ y \\ z \end{bmatrix}}_{X} = \underbrace{\begin{bmatrix} d_1^2 - x_1^2 - y_1^2 - z_1^2 \\ d_2^2 - x_2^2 - y_2^2 - z_2^2 \\ \vdots \end{bmatrix}}_{b}$$

On constate ici que la matrice H est constante, puisque les positions ($x_i$, $y_i z_i$) de chaque émetteur radio sont constantes.

Cette formalisation du système d'équation permet donc de rechercher une estimation $\hat{X}$ du vecteur $X$ contenant les coordonnées de l'aéronef en résolvant le système.

$$\underbrace{\begin{bmatrix} 1 & -2x_1 & -2y_1 & -2z_1 \\ 1 & -2x_2 & -2y_2 & -2z_2 \\ \vdots & \vdots & \vdots & \vdots \end{bmatrix}}_{H} \underbrace{\begin{bmatrix} x^2 + y^2 + z^2 \\ x \\ y \\ z \end{bmatrix}}_{X} = \underbrace{\begin{bmatrix} d_1^2 - x_1^2 - y_1^2 - z_1^2 \\ d_2^2 - x_2^2 - y_2^2 - z_2^2 \\ \vdots \end{bmatrix}}_{b}$$

Dans laquelle $d_i = D_i + \varepsilon_i$ est la valeur de la mesure de distance à la station i effectuée par l'interrogateur de l'avion, $D_i$ est la distance géométrique entre l'aéronef et chaque émetteur radio obtenues à l'étape 210, et $\varepsilon_i$ est la valeur de l'erreur entachant la mesure $d_i$

Ainsi, la conversion, à l'étape 220 des coordonnées des émetteurs radio d'un repère géographique à un système de référence terrestre permet de définir un système d'équations redondants liant la position de l'aéronef aux positions, fixes, des émetteurs radio.

Comme indiqué ci-dessus, dans un ensemble de modes de réalisation de l'invention, un émetteur radio virtuel est défini à partir des mesures barométriques. Dans ce cas, une équation additionnelle est ajoutée au système d'équations redondantes, liant la position de l'aéronef à cet émetteur virtuel. L'émetteur virtuel est localisé au centre de la Terre, et donc au point de coordonnées (0,0,0). Sa distance à l'aéronef, égale à l'altitude de l'aéronef additionnée au rayon de la Terre, est : $z_{bt} + R_E$. L'équation additionnelle liant la position de l'aéronef à celle de cet émetteur s'écrit donc :

$$x^2 + y^2 + z^2 = (z_{bt} + R_E)^2$$

Le système d'équations sous forme matricielle devient donc alors :

$$\underbrace{\begin{bmatrix} 1 & -2x_1 & -2y_1 & -2z_1 \\ 1 & -2x_2 & -2y_2 & -2z_2 \\ \vdots & \vdots & \vdots & \vdots \\ 1 & 0 & 0 & 0 \end{bmatrix}}_{H} \underbrace{\begin{bmatrix} x^2 + y^2 + z^2 \\ x \\ y \\ z \end{bmatrix}}_{X} = \underbrace{\begin{bmatrix} d_1^2 - x_1^2 - y_1^2 - z_1^2 \\ d_2^2 - x_2^2 - y_2^2 - z_2^2 \\ \vdots \\ (z_{bt} + R_E)^2 \end{bmatrix}}_{b}$$

La méthode 200 comprend ensuite une étape 240 de résolution dudit système d'équations, afin d'obtenir une position estimée de l'aéronef, et une matrice de covariance de l'erreur de position dans le système de référence terrestre.

De manière générale, de nombreuses manières de résoudre un système d'équations matricielles, permettant d'obtenir une estimation d'un vecteur d'état et une matrice de covariance de l'erreur sont connues de l'homme de l'art. En pratique, cela consiste à obtenir un vecteur d'état estimé $\hat{X}$, et la matrice de covariance de l'erreur associée.

Par exemple, cette étape peut consister en l'application d'une décomposition en valeurs singulières définissant des matrices U, S et V avec :

$$WH = USV^T$$

Où W est une matrice de pondération définie par :

$$W = \begin{bmatrix} \dfrac{1}{2D_1\sigma_{d_1} + \sigma_{d_1}^2} & & & \\ & \ddots & & \\ & & \dfrac{1}{2D_i\sigma_{d_i} + \sigma_{d_i}^2} & \\ & & & \ddots \\ & & & & \dfrac{1}{2D_N\sigma_{d_N} + \sigma_{d_N}^2} \end{bmatrix}$$

Dans laquelle:

- $D_i$ représente la distance entre l'aéronef, et l'émetteur radio (réel ou virtuel) d'indice i compris entre 1 et N (nombre de mesures de distances utilisées), obtenue à l'étape 210 ;
- $u_{di}$ représente l'écart-type du bruit sur la mesure de distance $d_i$.

Dans le cas où un émetteur radio virtuel basé sur les mesures barométriques est utilisé, la matrice W devient donc :

$$W = \begin{bmatrix} \dfrac{1}{2D_1\sigma_{d_1} + \sigma_{d_1}^2} & & & \\ & \ddots & & \\ & & \dfrac{1}{2D_i\sigma_{d_i} + \sigma_{d_i}^2} & \\ & & & \ddots \\ & & & & \dfrac{1}{2(z_{bt} + R_E)\sigma_Z + \sigma_Z^2} \end{bmatrix}$$

Une fois la décomposition en valeurs singulières U, S, V effectuée :

- Le vecteur d'état estimé, définissant la position estimée de l'aéronef, peut être obtenu par l'équation suivante :

$$\tilde{X} = VS^{-1}U^TWb$$

- La matrice P de covariance de l'erreur de position, exprimée dans le repère ECEF, est obtenue par :

$$P = VS^{-2}V$$

D'autres modes de résolution du système d'équation sont possibles.

Par exemple, la résolution du système d'équation peut être réalisée en utilisant une décomposition QR connue de l'homme de l'art, avec la matrice de pondération W défini précédemment. Dans le cadre de cette décomposition, on a : $WH = QR$ où Q est une matrice orthogonale telle que $Q^T = Q^{-1}$ et R est une matrice triangulaire supérieure.

On peut alors résoudre itérativement la position par $R\tilde{X} = Q^TWb$ et obtenir la matrice de covariance P de l'erreur de position dans le repère ECEF par : $P = R^{-1}(R^{-1})^T$.

La résolution du système peut également utiliser la pseudo inverse de type Moore-Penrose utilisant la même matrice de pondération W, et calculer la position par $\tilde{X} = (H^TW^2H)^{-1}H^TW^2b$ ; La Matrice de covariance de l'erreur de position dans le repère ECEF a alors pour expression $P = (H^TW^2H)^{-1}$.

La méthode 200 comprend ensuite une étape 250 de conversion de la position estimée de l'aéronef, et de la matrice de covariance de l'erreur de position dans le repère géographique.

Cette étape consiste à convertir la position estimée $\tilde{X}$, et la matrice de covariance obtenues dans le système de référence terrestre, en coordonnées géographiques. Par exemple, cela peut consister en une conversion de la position estimée $\tilde{X}$ dans le repère ECEF, en une position estimée $\hat{X}_{ned}$ par une méthode bien connue de l'homme de l'art, et de la matrice de covariance P dans le repère ECEF en une matrice de covariance $P_{NED}$ dans le repère NED.

Le changement de repère de la matrice de covariance peut se faire via une matrice de conversion du repère ECEF vers le repère NED :

$$M_{ecef2ned} = \begin{bmatrix} -\sin(lat)\cos(lon) & -\sin(lat)\sin(lon) & \cos(lat) \\ -\sin(lon) & \cos(lon) & 0 \\ -\cos(lat)\cos(lon) & -\cos(lat)\sin(lon) & -\sin(lat) \end{bmatrix}$$

Dans laquelle lat représente la latitude de l'aéronef, et lon sa longitude.

La matrice de covariance $P_{NED}$ dans le repère NED est alors obtenue par :

$$P_{NED} = M_{ecef2ned}\, P\, M_{ecef2ned}^T = \begin{pmatrix} p_{1,1} & p_{1,2} & p_{1,3} \\ p_{2,1} & p_{2,2} & p_{2,3} \\ p_{3,1} & p_{3,2} & p_{3,3} \end{pmatrix}$$

Cette matrice de covariance permet d'extraire la matrice de covariance $P_{NE}$ de l'erreur de position dans le plan horizontal :

$$P_{NE} = \begin{pmatrix} p_{1,1} & p_{1,2} \\ p_{2,1} & p_{2,2} \end{pmatrix}$$

La méthode 200 comprend enfin une étape 260 de calcul, à partir de la matrice de covariance de l'erreur de position dans le repère géographique, du rayon d'un cercle centrée autour de la position estimée de l'aéronef, dans laquelle se situe la position réelle de l'aéronef avec une probabilité égale ou supérieure à un seuil prédéfini.

Ce rayon, appelé également rayon de protection ou « **HIL** », permet de définir un cercle, centrée autour de la position estimée de l'aéronef, dans laquelle on peut garantir que se situe la position réelle de l'aéronef, avec une probabilité prédéfinie. Ceci permet donc de satisfaire les contraintes de la navigation RNP, même lorsque la géolocalisation par satellite n'est pas disponible.

Dans un ensemble de modes de réalisation, cette étape consiste à :

- pour chaque émetteur radio d'indice i :

  ◦ effectuer l'ensemble des étapes 230 à 250 avec le système d'équations dans lequel l'équation liant la position de l'aéronef et les positions dudit émetteurs radio a été supprimée, afin d'obtenir une position estimée $\tilde{X}_{ined}$ et une matrice de covariance de l'erreur de position $P_{NEi}$ dans le plan horizontal ne prenant pas en compte ledit émetteur radio d'indice i,

  ◦ calculer une différence $dP_i = P_{NE} - P_{NEi}$ entre la matrice de covariance de l'erreur de position $P_{NE}$ dans le plan horizontal, et la matrice de covariance de l'erreur de position $P_{NEi}$ dans le plan horizontal ne prenant pas en compte ledit émetteur radio d'indice i ;

  ◦ calculer une distance $D_i$, dans le plan horizontal, entre la position estimée $\tilde{X}_{NE}$ de l'aéronef, et la position estimée $\tilde{X}_{NEi}$ de l'aéronef ne prenant pas en compte ledit émetteur radio d'indice i ;

  ◦ calculer un rayon dudit cercle $HIL_i$ pour ledit émetteur radio d'indice i, en fonction de ladite différence $dP_i$, et de ladite distance $D_i$ ;

- calculer le rayon dudit cercle, comme le plus grand desdits rayons pour chaque émetteur d'indice i : $HIL = \max(HIL_i)$.

Ceci consiste donc à déterminer, pour chaque émetteur radio d'indice i, réel ou virtuel, quelle aurait été la position estimée de l'aéronef, et la matrice de covariance de la position dans le plan horizontal, si l'émetteur n'avait pas été pris en compte. Ceci consiste donc à effectuer toutes les étapes 230 à 250, c'est-à-dire la définition de la matrice représentant le système d'équations, la résolution du système d'équations, et la conversion de la position estimée de l'aéronef et de la matrice de covariance dans le repère géographique, sans l'équation $D_i^2 = (x - x_i)^2 + (y - y_i)^2 + (z - z_i)^2$ liant la position de l'aéronef à la position de la balise d'indice i. La position estimée de l'aéronef, et la matrice de covariance de l'erreur dans le plan horizontal sans tenir compte de la balise d'indice i sont notées respectivement $\tilde{X}_{ined}$ et $P_{NEi}$.

La différence $dP_i = P_{NE} - P_{NEi}$ entre la matrice de covariance de l'erreur de position $P_{NE}$ dans le plan horizontal, et la matrice de covariance de l'erreur de position $P_{NEi}$ dans le plan horizontal ne prenant pas en compte ledit émetteur radio d'indice i, et la distance $\Delta_i = \|\tilde{X}_{NE} - \tilde{X}_{NEi}\|$ dans le plan horizontal entre la position de l'aéronef, et la position de l'aéronef sans tenir compte de l'émetteur d'indice i sont donc des indications de l'erreur sur la position : plus elles sont importantes, moins la distance calculée entre l'émetteur radio d'indice i et l'aéronef concorde avec les distances calculées entre l'aéronef et les autres émetteurs radio. Ceci permet donc de déterminer un rayon de protection $HIL_i$ pour un émetteur radio donné. Le plus grand des rayons de protection $HIL = max(HIL_i)$ est utilisé comme rayon de protection global de l'aéronef.

Dans un ensemble de modes de réalisation de l'invention, le rayon de protection $HIL_i$ pour un émetteur radio d'indice i est calculé par les étapes suivantes :

- un calcul de l'écart-type de la différence de la matrice de covariance de l'erreur de position $P_{NE}$ dans le plan horizontal, et la matrice de covariance de l'erreur de position $P_{NEi}$ dans le plan horizontal ne prenant pas en compte ledit émetteur radio d'indice i : $\sigma_i = \sqrt{max(\lambda(dP_i))}$ dans laquelle $(\lambda(dP_i))$ est le vecteur de valeur propres de la matrice $dP_i$, et la fonction max() une fonction retournant le plus grand des éléments de la matrice ;
- le calcul d'un seuil $TH_i = T * \sigma_i$, où T est une constante prédéfinie ;
- si $\Delta_i < TH_i$, c'est-à-dire si la distance $\Delta_i$ dans le plan horizontal entre la position de l'aéronef, et la position de l'aéronef sans tenir compte de l'émetteur d'indice i est inférieure audit seuil $TH_i$, le rayon de protection pour l'émetteur radio d'indice i est calculé comme $HIL_i = TH_i + k\sqrt{max(\lambda(P_{NE\,i}))}$, où k est une constante, et $\lambda(P_{NE\,i})$ est le vecteur de valeurs propres de la matrice de covariance de l'erreur de position $P_{NEi}$ dans le plan horizontal ne prenant pas en compte ledit émetteur radio d'indice i;
- sinon (si $\Delta_i \geq TH_i$), le rayon de protection pour l'émetteur radio d'indice i est calculé comme $HIL_i = \Delta_i + k\sqrt{max(\lambda(P_{NE\,i}))}$.

Les première et deuxième constantes T et k permettent de calibrer les calculs, pour obtenir le rayon de protection avec une précision donnée, c'est-à-dire que leur choix permet de calculer un rayon de protection HIL et certifier que la position vraie de l'aéronef se situe dans la sphère de rayon HIL autour de la position estimée de l'aéronef, avec une probabilité donnée.

Dans un ensemble de modes de réalisation de l'invention, les première et deuxième constantes T et k sont déterminées en utilisant la loi de distribution du $\chi^2$ en se donnant une probabilité de fausse alarme et de non détection permettant de caractériser les performances du système.

Plus spécifiquement **T et k** peuvent être déterminés par :

$$T^2 = F^{-1}\left(1 - \left(\frac{PFA}{m}\right), 1\right) = \left\{T^2 : F(T^2, 1) = \frac{PFA}{m}\right\}$$

$$k^2 = F^{-1}(1 - PMD, 1)$$

Où :

- F est la fonction de densité de probabilité d'une distribution $\chi^2$ de degré 1 ;
- m est le nombre d'émetteurs radio, réels ou virtuels, utlisés ;
- PFA est la valeur de la probabilité cible de fausses alarmes; Elle dépend du besoin de disponibilité qu'on escompte du système de positionnement, une fausse alarme conduisant à ne plus utiliser le système alors qu'on pourrait encore l'utiliser.
- PND est la valeur de la probabilité cible de détections manquées souhaitée. Elle dépend du risque d'intégrité recherchée sur la position finale, et de la probabilité des pannes non détectées du système fournissant les mesures utilisées pour le positionnement.

Ainsi, le pré-calcul des deux constantes T et k permet de certifier que la position vraie l'aéronef se situe bien au sein de la sphère de rayon HIL autour de la position estimée de l'aéronef, avec une probabilité cible.

L'invention permet ainsi de déterminer la position d'un aéronef, et le rayon de protection associé, afin de satisfaire aux conditions de navigation RNP, même lorsque le positionnement GNSS n'est pas accessible.

Cette méthode de détermination de la position peut être implémentée directement dans le FMS, par exemple au sein du module LOCNAV 170.

La position, et le rayon de protection peuvent également être calculés par un calculateur hors FMS. Dans ce cas, le FMS calcule également une position de l'aéronef. Dans ce cas, la position pour la navigation RNP peut rester la position calculée par le FMS, et le rayon de protection est augmenté de la distance entre la position estimée de l'aéronef calculée par la méthode 200, et la position calculée par le FMS.

Ainsi, la méthode peut être implémentée sans modifier l'architecture du FMS, en prenant une marge de sécurité additionnelle, due à la différence entre la position calculée par le FMS, et la position calculée via la méthode 200.

Les exemples ci-dessus démontrent la capacité de l'invention à déterminer une position d'un aéronef associée à un rayon de protection, même lorsque le positionnement GNSS n'est pas disponible. Ils ne sont cependant donnés qu'à titre d'exemple et ne limitent en aucun cas la portée de l'invention, définie dans les revendications ci-dessous.

**Revendications**

1. Méthode (200) mise en œuvre par ordinateur embarqué dans un aéronef, comprenant :

   - une première étape d'obtention (210) de distances de l'aéronef par rapport à au moins quatre émetteurs radio ayant chacun une position fixe dans un repère géographique ;
   - une deuxième étape de conversion (220) des positions des émetteurs radio dans un système de référence terrestre ;
   - une troisième étape de définition (230), sous forme matricielle, d'un système d'équations redondantes liant, dans le système de référence terrestre, la position de l'aéronef et les positions des émetteurs radio ;
   - une quatrième étape de résolution (240) dudit système d'équations, afin d'obtenir une position estimée de l'aéronef, et une matrice de covariance de l'erreur de position dans le système de référence terrestre ;
   - une cinquième étape conversion (250) de la position estimée de l'aéronef, et de la matrice de covariance de l'erreur de position dans le repère géographique ;
   - une sixième étape de calcul (260), à partir de la matrice de covariance de l'erreur de position dans le repère géographique, du rayon d'une sphère centrée autour de la position estimée de l'aéronef, dans laquelle se situe la position réelle de l'aéronef avec une probabilité égale ou supérieure à un seuil prédéfini.

2. Méthode selon la revendication 1, dans laquelle les émetteurs radio sont des radiobalises.

3. Méthode selon la revendication 2, dans laquelle les émetteurs radio sont des radiobalises de type « Distance Measuring Equipement » (DME).

4. Méthode selon l'une des revendications 1 à 3, dans laquelle :

   - l'aéronef a une position dans le système de référence terrestre défini par un vecteur de coordonnées $(x, y, z)$ ;
   - chaque émetteur radio est défini par un indice i, et a une position dans le système de référence terrestre définie par un vecteur de 3 coordonnées $(x_i, y_i, z_i)$ ;
   - la position de chaque émetteur radio est lié à la position de l'aéronef par l'équation

   $$d_i^2 = (x - x_i)^2 + (y - y_i)^2 + (z - z_i)^2 .$$

5. Méthode selon la revendication 4, dans laquelle la définition sous forme matricielle du système d'équations redondantes consiste à définir un système d'équations de la forme :

$$\underbrace{\begin{bmatrix} 1 & -2x_1 & -2y_1 & -2z_1 \\ 1 & -2x_2 & -2y_2 & -2z_2 \\ \vdots & \vdots & \vdots & \vdots \end{bmatrix}}_{H} \underbrace{\begin{bmatrix} x^2 + y^2 + z^2 \\ x \\ y \\ z \end{bmatrix}}_{X} = \underbrace{\begin{bmatrix} d_1^2 - x_1^2 - y_1^2 - z_1^2 \\ d_2^2 - x_2^2 - y_2^2 - z_2^2 \\ \vdots \end{bmatrix}}_{b}$$

**6.** Méthode selon la revendication 5, dans laquelle l'étape de résolution du système d'équations utilise une matrice de pondération diagonale, comprenant pour chaque mesure de distance un élément de valeur égale à $\frac{1}{2d_i\sigma_{d_i}+\sigma_{d_i}^2}$ , où :

- $d_i$ représente la distance entre l'aéronef, et l'émetteur radio d'indice i ;
- $\sigma_{d_i}$ représente l'écart-type du bruit sur la mesure de distance $d_i$

**7.** Méthode selon la revendication 6, dans laquelle l'étape de résolution du système d'équations consiste en une décomposition en valeurs singulières, une décomposition QR, ou une résolution pseudo inverse de Moore-Penrose.

**8.** Méthode selon l'une des revendications 1 à 7, dans laquelle la sixième étape consiste à :

- pour chaque émetteur radio d'indice i :

○ effectuer l'ensemble des troisième à cinquième étapes avec le système d'équations dans lequel l'équation liant la position de l'aéronef et les positions dudit émetteurs radio a été supprimée, afin d'obtenir une position estimée et une matrice de covariance de l'erreur de position dans le plan horizontal ne prenant pas en compte ledit émetteur radio d'indice i;
○ calculer une différence entre la matrice de covariance de l'erreur de position dans le plan horizontal, et la matrice de covariance de l'erreur de position dans le plan horizontal ne prenant pas en compte ledit émetteur radio d'indice i ;
○ calculer une distance, dans le plan horizontal, entre la position estimée de l'aéronef, et la position estimée de l'aéronef ne prenant pas en compte ledit émetteur radio d'indice i ;
○ calculer un rayon de ladite sphère pour ledit émetteur radio d'indice i, en fonction de ladite différence, et de ladite distance ;

- calculer le rayon de ladite sphère, comme le plus grand desdits rayons pour chaque émetteur d'indice i.

**9.** Méthode selon la revendication 8, dans laquelle le rayon de ladite sphère pour ledit émetteur radio d'indice i, est calculé par les étapes suivantes :

- un calcul de l'écart-type $\sigma_i$ d'une matrice $dP_i$ des différences entre la matrice de covariance de l'erreur de position dans le plan horizontal, et la matrice de covariance de l'erreur de position dans le plan horizontal ne prenant pas en compte ledit émetteur radio d'indice i, par l'application de la formule $\sigma_i = \sqrt{\max(\lambda(dP_i))}$ dans laquelle $(\lambda(dP_i))$ est le vecteur de valeur propres de ladite matrice des différences, et la fonction max() une fonction retournant le plus grand des éléments de la matrice ;
- le calcul d'un seuil $TH_i$ égal à la multiplication dudit écart-type $\sigma_i$ de la matrice $dP_i$ des différences par une première constate prédéfinie T;
- si la distance $D_i$ dans le plan horizontal entre la position de l'aéronef, et la position de l'aéronef sans tenir compte de l'émetteur d'indice i est inférieure audit seuil $TH_i$, le calcul du rayon de ladite sphère pour ledit émetteur radio d'indice i par l'application de la formule $TH_i + k\sqrt{\max(\lambda(P_{NE\,i}))}$, où k est une deuxième constante prédéfinie, et $\lambda(P_{NE\,i})$ est le vecteur de valeurs propres de la matrice $P_{NEi}$ de covariance de l'erreur de position dans le plan horizontal ne prenant pas en compte ledit émetteur radio d'indice i ;
- sinon, le calcul du rayon de ladite sphère pour ledit émetteur radio d'indice i par l'application de la formule

$$= D_i + k\sqrt{\max(\lambda(P_{NE\,i}))} .$$

**10.** Méthode selon la revendication 9, dans laquelle :

- la première constante prédéfinie T est obtenue par l'application de la formule :

$$T^2 = F^{-1}\left(1 - \left(\frac{PFA}{m}\right), 1\right) = \left\{T^2 : F(T^2, 1) = \frac{PFA}{m}\right\}$$

- la deuxième constante prédéfinie k est obtenue par l'application de la formule :

$$k^2 = F^{-1}(1 - PMD, 1)$$

Où :

- F est la fonction de densité de probabilité d'une distribution $\chi^2$ de degré 1 ;
- m est le nombre d'émetteurs radio ;
- PFA est une probabilité cible de fausses alarmes pour la détection d'erreurs de mesure de distance;
- PND est une probabilité cible de détections manquées d'erreurs de mesure de distance souhaitée.

**11.** Méthode selon l'une des revendications 1 à 10, comprenant de plus l'obtention d'une distance de l'aéronef par rapport à un émetteur radio virtuel à partir d'une mesure de pression atmosphérique d'un baromètre embarqué dans l'aéronef.

**12.** Méthode selon la revendication 11, dans laquelle :

- ledit émetteur virtuel est situé au centre de la Terre ;
- une altitude de l'aéronef est évaluée à partir de la mesure de la pression atmosphérique ;
- la distance de l'aéronef par rapport à l'émetteur radio virtuel est égale à la somme du rayon de la Terre et de l'altitude de l'aéronef.

**13.** Méthode selon l'une des revendications 7 à 12, dépendant de la revendication 4, dans lequel le système d'équations redondantes comprend l'équation additionnelle :

$$x^2 + y^2 + z^2 = (z_{bt} + R_E)^2$$

Où :

- $z_{bt}$ représente l'altitude de l'aéronef ;
- $R_E$ représente le rayon de la Terre, à la position de l'aéronef.

**14.** Méthode selon la revendication 13, dépendant de la revendication 5, dans laquelle la définition sous forme matricielle du système d'équations redondantes consiste à définir un système d'équations de la forme :

$$\underbrace{\begin{bmatrix} 1 & -2x_1 & -2y_1 & -2z_1 \\ 1 & -2x_2 & -2y_2 & -2z_2 \\ \vdots & \vdots & \vdots & \vdots \\ 1 & 0 & 0 & 0 \end{bmatrix}}_{H} \underbrace{\begin{bmatrix} x^2 + y^2 + z^2 \\ x \\ y \\ z \end{bmatrix}}_{X} = \underbrace{\begin{bmatrix} d_1^2 - x_1^2 - y_1^2 - z_1^2 \\ d_2^2 - x_2^2 - y_2^2 - z_2^2 \\ \vdots \\ (z_{bt} + R_E)^2 \end{bmatrix}}_{b}$$

**15.** Programme d'ordinateur comprenant des instructions de code de programme enregistrées sur un support lisible par ordinateur, lesdites instructions de code de programme étant configurées, lorsque ledit programme fonctionne sur un ordinateur pour exécuter une méthode selon l'une des revendications 1 à 14.

**16.** Système de gestion de vol d'un aéronef comprenant des moyens de calcul configurés pour exécuter une méthode selon l'une des revendications 1 à 14.

**Patentansprüche**

1.  Verfahren (200), das von einem Computer an Bord eines Luftfahrzeugs umgesetzt wird, umfassend:

    - einen ersten Schritt zum Erhalten (210) von Abständen der Luftfahrzeugs in Bezug auf mindestens vier Funksender, die jeweils eine festgelegte Position in einem geographischen Bezugssystem aufweisen;
    - einen zweiten Umwandlungsschritt (220) der Positionen der Funksender in ein terrestrisches Referenzsystem;
    - einen dritten Definitionsschritt (230), in Matrixform, eines Systems redundanter Gleichungen, die in dem terrestrischen Referenzsystem die Position des Luftfahrzeugs und die Positionen der Funksender verbinden;
    - einen vierten Auflösungsschritt (240) des Systems von Gleichungen, um eine abgeschätzte Position des Luftfahrzeugs und eine Kovarianz-Matrix des Positionsfehlers in dem terrestrischen Referenzsystem zu erhalten;
    - einen fünften Umwandlungsschritt (250) der geschätzten Position des Luftfahrzeugs und der Kovarianz-Matrix des Positionsfehlers in dem geographischen Bezugssystem;
    - einen sechsten Berechnungsschritt (260), ausgehend von der Kovarianz-Matrix des Positionsfehlers in dem geographischen Bezugssystem, des Radius einer um die geschätzte Position des Luftfahrzeugs herum zentrierten Sphäre, in der sich die reale Position des Luftfahrzeugs mit einer Wahrscheinlichkeit von gleich oder größer als einem vordefinierten Schwellenwert befindet.

2.  Verfahren nach Anspruch 1, wobei die Funksender Funkbaken sind.

3.  Verfahren nach Anspruch 2, wobei die Funksender Funkbaken des Typs "Entfernungsmessausstattung (Distance Measuring Equipement)" (DME) sind.

4.  Verfahren nach einem der Ansprüche 1 bis 3, wobei:

    - das Luftfahrzeug eine Position in dem terrestrischen Referenzsystem aufweist, die durch einen Koordinatenvektor $(x, y, z)$ definiert ist;
    - jeder Funksender durch einen Index i definiert ist und eine Position in dem terrestrischen Referenzsystem aufweist, die durch einen Vektor mit 3 Koordinaten $(x_i, y_i z_i)$ definiert ist;
    - die Position jedes Funksenders mit der Position des Luftfahrzeugs durch die Gleichung

    $$d_i^2 = (x - x_i)^2 + (y - y_i)^2 + (z - z_i)^2$$ verbunden ist.

5.  Verfahren nach Anspruch 4, wobei die Definition in Matrixform des Systems redundanter Gleichungen darin besteht, ein System von Gleichungen der folgenden Form zu definieren:

    $$\underbrace{\begin{bmatrix} 1 & -2x_1 & -2y_1 & -2z_1 \\ 1 & -2x_2 & -2y_2 & -2z_2 \\ \vdots & \vdots & \vdots & \vdots \end{bmatrix}}_{H} \underbrace{\begin{bmatrix} x^2 + y^2 + z^2 \\ x \\ y \\ z \end{bmatrix}}_{X} = \underbrace{\begin{bmatrix} d_1^2 - x_1^2 - y_1^2 - z_1^2 \\ d_2^2 - x_2^2 - y_2^2 - z_2^2 \\ \vdots \end{bmatrix}}_{b}$$

6.  Verfahren nach Anspruch 5, wobei der Auflösungsschritt des Systems von Gleichungen eine diagonale Gewichtungsmatrix verwendet, die für jede Abstandsmessung ein Element mit einem Wert gleich $\frac{1}{2d_i\sigma_{d_i} + \sigma_{d_i}^2}$, umfasst, wobei:

    - $d_i$ den Abstand zwischen dem Luftfahrzeug und dem Funksender mit Index i darstellt;
    - $\sigma_{d_i}$ die Standardabweichung des Rauschens der Abstandsmessung $d_i$ darstellt

7.  Verfahren nach Anspruch 6, wobei der Auflösungsschritt des Systems von Gleichungen aus einer Singulärwertzerlegung, einer QR-Zerlegung oder einer Auflösung mittels der Moore-Penrose-Pseudoinversen besteht.

8. Verfahren nach einem der Ansprüche 1 bis 7, wobei der sechste Schritt besteht aus:

- für jeden Funksender mit Index i:

  - Ausführen der Gesamtheit des dritten bis fünften Schritts mit dem System von Gleichungen, wobei die Gleichung, welche die Position des Luftfahrzeugs und die Positionen des Funksenders verbindet, unterdrückt wurde, um eine geschätzte Position und eine Kovarianz-Matrix des Positionsfehlers in der horizontalen Ebene zu erhalten, ohne den Funksender mit Index i zu berücksichtigen;
  - Berechnen einer Differenz zwischen der Kovarianz-Matrix des Positionsfehlers in der horizontalen Ebene und der Kovarianz-Matrix des Positionsfehlers in der horizontalen Ebene, ohne den Funksender mit Index i zu berücksichtigen;
  - Berechnen eines Abstands in der horizontalen Ebene zwischen der geschätzten Position des Luftfahrzeugs und der geschätzten Position des Luftfahrzeugs, ohne den Funksender mit Index i zu berücksichtigen;
  - Berechnen eines Radius der Sphäre für den Funksender mit Index i in Abhängigkeit von der Differenz und dem Abstand;

- Berechnen des Radius der Sphäre, wie den größten der Radien, für jeden Sender mit Index i.

9. Verfahren nach Anspruch 8, wobei der Radius der Sphäre für den Funksender mit Index i durch die folgenden Schritte berechnet wird:

  - eine Berechnung der Standardabweichung ($\sigma_i$ einer Matrix $dP_i$ der Differenzen zwischen der Kovarianz-Matrix des Positionsfehlers in der horizontalen Ebene und der Kovarianz-Matrix des Positionsfehlers in der horizontalen Ebene, ohne den Funksender mit Index i zu berücksichtigen, durch Anwendung der Formel

  $$\sigma_i = \sqrt{\max\left(\lambda(dP_i)\right)}$$, in der ($\lambda(dP_i)$) der Vektor von Eigenwerten der Matrix der Differenzen ist und die Funktion max() eine Funktion ist, die das größte der Elemente der Matrix zurücksendet;
  - die Berechnung eines Schwellenwerts $TH_i$ gleich der Multiplikation der Standardabweichung $\sigma_i$ der Matrix $dP_i$ der Differenzen mit einer ersten vordefinierten Konstanten T;
  - wenn der Abstand $D_i$ in der horizontalen Ebene zwischen der Position des Luftfahrzeugs und der Position des Luftfahrzeugs, ohne den Sender mit Index i zu berücksichtigen, kleiner ist als der Schwellenwert $TH_i$, die Berechnung des Radius der Sphäre für jeden Funksender mit Index i durch die Anwendung der Formel

  $$TH_i + k\sqrt{\max\left(\lambda(P_{NEi})\right)}$$, wobei k eine zweite vordefinierte Konstante ist und $\lambda(P_{NEi})$ der Vektor von Eigenwerten der Kovarianz-Matrix $P_{NEi}$ des Positionsfehlers in der horizontalen Ebene ist, ohne den Funksender mit Index i zu berücksichtigen;
  - ansonsten die Berechnung des Radius der Sphäre für jeden Funksender mit Index i durch Anwendung der

  $$\text{Formel} = D_i + k\sqrt{\max\left(\lambda(P_{NEi})\right)}.$$

10. Verfahren nach Anspruch 9, wobei:

  - die erste vordefinierte Konstante T erhalten wird durch Anwendung der Formel:

  $$T^2 = F^{-1}\left(1 - \left(\frac{PFA}{m}\right), 1\right) = \left\{T^2 : F(T^2, 1) = \frac{PFA}{m}\right\}$$

  - die zweite vordefinierte Konstante k erhalten wird durch Anwendung der Formel:

  $$k^2 = F^{-1}(1 - PMD, 1)$$

  wobei:

    - F die Wahrscheinlichkeitsdichtefunktion einer Verteilung $x^2$ der Stufe 1 ist;

- m die Anzahl an Funksendern ist;
- PFA eine Zielwahrscheinlichkeit von Fehlalarmen für die Erkennung von Abstandsmessfehlern ist;
- PND eine gewünschte Zielwahrscheinlichkeit von nicht erkannten Abstandsmessfehlern ist.

**11.** Verfahren nach einem der Ansprüche 1 bis 10, das weiter den Erhalt eines Abstands der Luftfahrzeugs in Bezug auf einen virtuellen Funksender ausgehend von einer Messung des atmosphärischen Drucks eines Barometers an Bord des Luftfahrzeugs umfasst.

**12.** Verfahren nach Anspruch 11, wobei:

- sich der virtuelle Sender im Erdmittelpunkt befindet;
- eine Höhe des Luftfahrzeugs ausgehend von der Messung des atmosphärischen Drucks bewertet wird;
- der Abstand des Luftfahrzeugs in Bezug auf den virtuellen Funksender gleich der Summe des Radius der Erde und der Höhe des Luftfahrzeugs ist.

**13.** Verfahren nach einem der Ansprüche 7 bis 12, von Anspruch 4 abhängig, wobei das System redundanter Gleichungen die zusätzliche Gleichung umfasst:

$$x^2 + y^2 + z^2 = (z_{bt} + R_E)^2$$

wobei:

- $z_{bt}$ die Höhe des Luftfahrzeugs darstellt;
- $R_E$ den Radius der Erde an der Position des Luftfahrzeugs darstellt.

**14.** Verfahren nach Anspruch 13, von Anspruch 5 abhängig, wobei die Definition in Matrixform des Systems redundanter Gleichungen darin besteht, ein System von Gleichungen der folgenden Form zu definieren:

$$\underbrace{\begin{bmatrix} 1 & -2x_1 & -2y_1 & -2z_1 \\ 1 & -2x_2 & -2y_2 & -2z_2 \\ \vdots & \vdots & \vdots & \vdots \\ 1 & 0 & 0 & 0 \end{bmatrix}}_{H} \underbrace{\begin{bmatrix} x^2 + y^2 + z^2 \\ x \\ y \\ z \end{bmatrix}}_{X} = \underbrace{\begin{bmatrix} d_1^2 - x_1^2 - y_1^2 - z_1^2 \\ d_2^2 - x_2^2 - y_2^2 - z_2^2 \\ \vdots \\ (z_{bt} + R_E)^2 \end{bmatrix}}_{b}$$

**15.** Computerprogramm, das Programmcodeanweisungen umfasst, die auf einem computerlesbaren Träger gespeichert sind, wobei die Programmcodeanweisungen konfiguriert sind, um, wenn das Programm auf einem Computer läuft, ein Verfahren nach einem der Ansprüche 1 bis 14 auszuführen.

**16.** Flugsicherungssystem eines Luftfahrzeugs, das Berechnungsmittel umfasst, die konfiguriert sind, um ein Verfahren nach einem der Ansprüche 1 bis 14 auszuführen.

**Claims**

**1.** Method (200) implemented by computer embedded in an aircraft, comprising;

- a first step (210) of obtaining distances from the aircraft relative to at least four radio transmitters, each having a fixed position in a geographical frame of reference;
- a second step (220) of converting positions of the radio transmitters into a land reference system;
- a third step (230) of defining, in matrix form, a redundant system of equations connecting, in the land reference system, the position of the aircraft and the positions of the radio transmitters;
- a fourth step (240) of resolving said system of equations, in order to obtain an estimated position of the aircraft, and a covariance matrix of the positional error in the land reference system;
- a fifth step (250) of converting the estimated position of the aircraft, and of the covariance matrix of the positional error in the geographical frame of reference;

- a sixth step (260) of calculating, from the covariance matrix of the positional error in the geographical frame of reference, the radius of a sphere centred around the estimated position of the aircraft, wherein the real position of the aircraft is located, with a probability equal to or greater than a predefined threshold.

2. Method according to claim 1, wherein the radio transmitters are radio beacons.

3. Method according to claim 2, wherein the radio transmitters are "Distance Measuring Equipment" (DME)-type radio beacons.

4. Method according to any one of claims 1 to 3, wherein:

   - the aircraft has a position in the land reference system defined by a coordinate vector ($x$, $y$, $z$);
   - each radio transmitter is defined by an index i, and a position in the land reference system defined by a 3-coordinate vector ($x_i$, $y_i z_i$);
   - the position of each radio transmitter is connected to the position of the aircraft by the equation

   $$d_i^2 = (x - x_i)^2 + (y - y_i)^2 + (z - z_i)^2 \ .$$

5. Method according to claim 4, wherein the definition in matrix form of the system of redundant equations consists in defining a system of equations of the form:

$$\underbrace{\begin{bmatrix} 1 & -2x_1 & -2y_1 & -2z_1 \\ 1 & -2x_2 & -2y_2 & -2z_2 \\ \vdots & \vdots & \vdots & \vdots \end{bmatrix}}_{H} \underbrace{\begin{bmatrix} x^2 + y^2 + z^2 \\ x \\ y \\ z \end{bmatrix}}_{X} = \underbrace{\begin{bmatrix} d_1^2 - x_1^2 - y_1^2 - z_1^2 \\ d_2^2 - x_2^2 - y_2^2 - z_2^2 \\ \vdots \end{bmatrix}}_{b}$$

6. Method according to claim 5, wherein the step of resolving the system of equations uses a diagonal weighting matrix, comprising for each distance measurement, an element 1 of value equal to $\frac{1}{2d_i \sigma_{d_i} + \sigma_{d_i}^2}$ , where:

   - $d_i$ represents the distance between the aircraft, and the radio transmitter of index i;
   - $\sigma_{d_i}$ represents the standard deviation of noise over the distance measurement $d_i$

7. Method according to claim 6, wherein the step of resolving the system of equations consists of a breakdown into singular values, a QR breakdown, or a Moore-Penrose inverted pseudo resolution.

8. Method according to any one of claims 1 to 7, wherein the sixth step consists in:

   - for each radio transmitter of index i:

      - carrying out all of the third to fifth steps with the system of equations wherein the equation connecting the position of the aircraft and the positions of said radio transmitters has been removed, in order to obtain an estimated position and a covariance of the positional error in the horizontal plane not taking into account said radio transmitter of index i;
      - calculating a difference between the covariance matrix of the positional error in the horizontal plane, and the covariance matrix of the positional error in the horizontal plane not taking into account said radio transmitter of index i;
      - calculating a distance, in the horizontal plane, between the estimated position of the aircraft, and the estimated position of the aircraft not taking into account said radio transmitter of index i;
      - calculating a radius of said sphere for said radio transmitter of index i, according to said difference, and of said distance;

   - calculating the radius of said sphere, like the greatest of said radii for each transmitter of index i.

9. Method according to claim 8, wherein the radius of said sphere for said radio transmitter of index i, is calculated by the following steps:

- a calculation of the standard deviation $\sigma_i$ of a matrix $dP_i$ of the differences between the covariance matrix of the positional error in the horizontal plane, and the covariance matrix of the positional error in the horizontal plane not taking into account said radio transmitter of index i, by applying the formula $\sigma_i = \sqrt{\max\left(\lambda(dP_i)\right)}$ wherein ($\lambda(dP_i)$) is the vector of specific values of said matrix of differences, and the function max() is a function returning the largest of the elements from the matrix;

- the calculation of a threshold $TH_i$ equal to the multiplication of said standard deviation $\sigma_i$ of the matrix $dP_i$ of the differences by a predefined first constant T;

- if the distance $D_i$ in the horizontal plane between the position of the aircraft, and the position of the aircraft, without taking into account the transmitter of index i is less than said threshold $TH_i$ the calculation of the radius of said sphere for said radio transmitter of index i by applying the formula $TH_i + k\sqrt{\max\left(\lambda(P_{NEi})\right)}$, where k is a predefined second constant, and $\lambda(P_{NEi})$ is the vector of specific values of the covariance matrix $P_{NEi}$ of the positional error in the horizontal plane not taking into account said radio transmitter of index i;

- otherwise, the calculation of the radius of said sphere for said radio transmitter of index i by applying the

$$= D_i + k\sqrt{\max\left(\lambda(P_{NEi})\right)}.$$

10. Method according to claim 9, wherein:

- the predefined first constant T is obtained by applying the formula:

$$T^2 = F^{-1}\left(1 - \left(\frac{PFA}{m}\right), 1\right) = \left\{T^2 : F(T^2, 1) = \frac{PFA}{m}\right\}$$

- the predefined second constant k is obtained by applying the formula:

$$k^2 = F^{-1}(1 - PMD, 1)$$

Where:

- F is the probability function density of a degree 1 distribution $x^2$;
m is the number of radio transmitters;
- PFA is a target false alarm probability for detecting distance measurement errors;
- PND is a target missed detection probability of desired distance measurement errors.

11. Method according to any one of claims 1 to 10, in addition comprising the obtaining of a distance of the aircraft relative to a virtual radio transmitter from an atmospheric pressure measurement from a barometer embedded in the aircraft.

12. Method according to claim 11, wherein:

- said virtual transmitter is located at the centre of the Earth;
- an altitude of the aircraft is evaluated from the atmospheric pressure measurement;
- the distance of the aircraft relative to the virtual radio transmitter is equal to the sum of the radius of the Earth and of the altitude of the aircraft.

13. Method according to any one of claims 7 to 12, dependent on claim 4, wherein the system of redundant equations comprises the additional equation:

$$x^2 + y^2 + z^2 = (z_{bt} + R_E)^2$$

Where:

- $z_{bt}$ represents the altitude of the aircraft;
- $R_E$ represents the radius of the Earth, at the position of the aircraft.

**14.** Method according to claim 13, dependent on claim 5, wherein the definition in matrix form of the system of redundant equations consists in defining a system of equations of the form:

$$\underbrace{\begin{bmatrix} 1 & -2x_1 & -2y_1 & -2z_1 \\ 1 & -2x_2 & -2y_2 & -2z_2 \\ \vdots & \vdots & \vdots & \vdots \\ 1 & 0 & 0 & 0 \end{bmatrix}}_{H} \underbrace{\begin{bmatrix} x^2 + y^2 + z^2 \\ x \\ y \\ z \end{bmatrix}}_{X} = \underbrace{\begin{bmatrix} d_1^2 - x_1^2 - y_1^2 - z_1^2 \\ d_2^2 - x_2^2 - y_2^2 - z_2^2 \\ \vdots \\ (z_{bt} + R_E)^2 \end{bmatrix}}_{b}$$

**15.** Computer program comprising program code instructions recorded on a medium which can be read by a computer, said program code instructions being configured, when said program operates on a computer to execute a method according to any one of claims 1 to 14.

**16.** Flight management system of an aircraft comprising calculation means configured to execute a method according to any one of claims 1 to 14.

FIG.1

210 — Obtention distances entre aéronef et émetteurs radio

220 — Conversion positions émetteurs radio dans système de référence terrestre

230 — Définition équations distances sous forme matricielle

240 — Résolution du système d'équations

250 — Conversion position et matrice de covariance dans repère géographique

260 — Calcul rayon de protection

200

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2003691 A
- US 3659085 A

- FR 1871548

**Littérature non-brevet citée dans la description**

- **BERZ, G** ; **VITAN, V.** ; **SKYRDA, I.** Can Current DME Support PBN Operations with Integrity?. *In Proceedings of the 26th International Technical Meeting of the Satellite Division of The Institute of Navigation (ION GNSS+ 2013)*, September 2013, 233-250

- Placing LDACS-based ranging sources for robust RNP 1.0 accuracy en-route. **BATTISTA , G.** ; **KUMAR, R** ; **NOSSEK, E** ; **OSECHAS, O.** In 2017 IEEE/AIAA 36th Digital Avionics Systems Conference (DASC). IEEE, September 2017, 1-9